# EUROPEAN PATENT APPLICATION

(11) **EP 3 136 660 A1**
(43) Date of publication of application: **01.03.2017**
(21) Application number: 14890023.6
(22) Date of filing: 22.04.2014
(51) Int. Cl.: H04L 12/707

(54) **NETWORK MANAGEMENT DEVICE AND NETWORK MANAGEMENT METHOD**

(71) Applicant: NEC Corporation, Tokyo 108-8001 (JP)
(72) Inventor: FUKUI, Kenji, Tokyo 108-8001 (JP)
(74) Representative: Vossius & Partner Patentanwälte Rechtsanwälte mbB
(86) International application number: PCT/JP2014/002251
(87) International publication number: WO 2015/162635

(57) **Abstract**

In order to efficiently utilize communication resources for a detour path for a path in a network comprising a plurality of nodes, a network management device is provided with: a path information storage unit (21) that stores a communication route between two nodes and communication resources allocated thereto; a resource information storage unit (22) that stores communication resource allocation states; an allocation state determination unit (23) that determines allocation states of communication resources expected to be allocated to a path to be registered; a primary path registration unit (24) that, in registering a primary path, if none of communication resources expected to be allocated to the primary path has been allocated to any already registered path, notifies each node on the primary path to set up the route, registers the primary path into the path information storage unit (21) and updates the allocation states of the allocated communication resources; and a backup path registration unit (25) that, in registering a backup path, if none of communication resources expected to be allocated to the backup path has been allocated to any already registered primary path, registers the backup path into the path information storage unit (21) and updates the allocation states of the allocated communication resources.

## Description

### [Technical Field]

The present invention relates to a network management device and a network management method for managing communication resources in a communication system.

### [Background Art]

In a communication system consisting of a plurality of communication devices (nodes), the reliability of communication on an End-to-End path is increased by having various redundant configurations. However, for example, in a communication system of a small scale network having a large number of paths operated with a limited amount of communication resources, it may occur that redundancy cannot be secured for all of the paths but a redundant configuration can be provided for only some of the paths.

At a time of communication failure occurrence, package replacement and the like, a path with no redundant configuration comes to require a temporary detour path. However, if a detour path is set up only when it becomes necessary, addition of a communication resource and its operation cost are required on every such occasion. Here, the communication resource is referred to as a resource used for logically dividing a physical transmission line in multiplex communication. As such a communication resource, for example, a time slot in a TDM (Time Division Multiplex) network and a wavelength in a WDM (Wavelength Division Multiplex) network are mentioned. Thus performing, in an unplanned manner, addition of a communication resource and setting up of a detour path only when they become necessary causes a problem of leading to non-efficient communication resource utilization.

An example of a technology related to such a problem is described in Patent Literature 1. In the related technology, when setting a working path from a starting node to a terminus node, a plurality of backup paths with their starting nodes corresponding to respective nodes on the working path are also set.

Further, another example of a technology related to the above-described problem is described in Patent Literature 2. In this related technology, a node on a working path reserves a backup path, by transferring a reservation setting message for the backup path to a detour path which reaches another node located more downstream than the node without running on the working path. Then, a node on the working path having become the terminus node of a backup path sequentially repeats the transfer of a reservation setting message for a backup path to a detour path which reaches another node located more downstream than the node without running on the working path.

### [Citation List]

### [Patent Literature]

[Patent Literature 1 Japanese Patent Application Laid-Open No. 2002-344491
[Patent Literature 2] Japanese Patent Application Laid-Open No. 2005-210514

### [Summary of Invention]

### [Technical Problem]

However, the related technologies described in Patent Literature 1 and Patent Literature 2 have the following problems.

Patent Literature 1 describes that a plurality of backup paths with no possibility of simultaneous use can share a communication resource in the same node-to-node link. However, it describes nothing about details of how to manage the shared communication resource.

Patent Literature 2 describes calculating in advance the amount of communication resource required at a common node on a plurality of backup paths, in a case the communication resource is shared by the plurality of backup paths. However, it describes nothing about details of how the shared communication resource is managed.

The present invention has been made to solve the above-described problems, and accordingly is aimed at providing a technology for managing a communication resource to be used for a detour path for a path in a network consisting of a plurality of nodes in a manner to use the communication resource efficiently.

### [Solution to Problem]

A network management device of the present invention includes: path information storage means for storing path information including information about each of pairs of two communication devices (nodes) among a plurality of communication devices capable of communicating with each other, the information representing a primary or backup communication route (path) between the two nodes and one or more communication resources allocated to the path; resource information storage means for storing allocation state information, about each of the communication resources, representing the communication resource's allocation state to the path; allocation state determination means for, when the path information to be registered has been inputted, determining the allocation states of one or more communication resources to be allocated to the path represented by the path information by referring to the resource information storage means; primary path registration means for, when the inputted path information represents a primary path to be registered, if the allocation state determination means determines that none of one or more communication resources to be allocated to the primary path to be registered has been allocated to any one of already registered paths, notifying each node on the primary path to set up a route based on the inputted path information, registering the inputted path information into the path information storage means and updating the allocation state information about the one or more communication resources to be allocated to the primary path; and backup path registration means for, when the inputted path information represents a backup path to be registered, if the allocation state determination means determines that none of one or more communication resources to be allocated to the backup path to be registered has been allocated to any one of already registered primary paths, registering the inputted path information into the path information storage means and updating the allocation state information about the one or more communication resources to be allocated to the backup path.

The communication device of present invention includes: path setting means for, on receiving notification to set up a route based on the path information from above-described network management device, setting up a route in a manner to enable communication with other communication devices neighboring the own communication device on the path by the use of communication resources allocated to the path; and multiplex communication means for performing multiplex communication with the other communication devices based on the setting by the path setting means.

The communication system of the present invention includes above-described network management device and above-described communication device.

The network management method of the present invention includes, by the use of path information storage means for storing path information including information about each of pairs of two communication devices (nodes) among a plurality of communication devices capable of communicating with each other, the information representing a primary or backup communication route (path) between the two nodes and one or more communication resources allocated to the path, and resource information storage means for storing allocation state information, about each of the communication resources, representing the communication resource's allocation state to the path: when the path information to be registered has been inputted, determining the allocation states of one or more communication resources to be allocated to the path represented by the path information by referring to the resource information storage means; and when the inputted path information represents a primary path to be registered, if it is determined that none of one or more communication resources to be allocated to the primary path to be registered has been allocated to any one of already registered paths, notifying each node on the primary path to set up a route based on the inputted path information, registering the inputted path information into the path information storage means and updating the allocation state information about the one or more communication resources to be allocated to the primary path, and when the inputted path information represents a backup path to be registered, if it is determined that none of one or more communication resources to be allocated to the backup path to be registered has been allocated to any one of already registered primary paths, registering the inputted path information into the path information storage means and updating the allocation state information about the one or more communication resources to be allocated to the backup path.

The program recording medium of the present invention stores a computer program for causing a computer to execute, by the use of path information storage means for storing path information including information about each of pairs of two communication devices (nodes) among a plurality of communication devices capable of communicating with each other, the information representing a primary or backup communication route (path) between the two nodes and one or more communication resources allocated to the path, and resource information storage means for storing allocation state information, about each of the communication resources, representing the communication resource's allocation state to the path: an allocation state determination step of, when the path information to be registered has been inputted, determining the allocation states of one or more communication resources to be allocated to the path represented by the path information by referring to the resource information storage means; a primary path registration step of, when the inputted path information represents a primary path to be registered, if it is determined in the allocation state determination step that none of one or more communication resources to be allocated to the primary path to be registered has been allocated to any one of already registered paths, notifying each node on the primary path to set up a route based on the inputted path information, registering the inputted path information into the path information storage means and updating the allocation state information about the one or more communication resources to be allocated to the primary path; and a backup path registration step of, when the inputted path information represents a backup path to be registered, if it is determined in the allocation state determination step that none of one or more communication resources to be allocated to the backup path to be registered has been allocated to any one of already registered primary paths, registering the inputted path information into the path information storage means and updating the allocation state information about the one or more communication resources to be allocated to the backup path.

### [Advantageous Effects of Invention]

The present invention provides a technology for managing a communication resource to be used for a detour path for a path in a network consisting of a plurality of nodes in a manner to use the communication resource efficiently.

### [Brief Description of Drawings]

[FIG. 1] A block diagram showing a configuration of a communication system as a first exemplary embodiment of the present invention
[FIG. 2] A functional block diagram of devices constituting the communication system as the first exemplary embodiment
[FIG. 3] A diagram showing an example of a hardware configuration of a communication device in the first exemplary embodiment
[FIG. 4] A diagram showing an example of a hardware configuration of a network management device in the first exemplary embodiment
[FIG. 5] A diagram showing an example of information stored in a path information storage unit in the first exemplary embodiment
[FIG. 6] A diagram showing an example of information stored in a resource information storage unit in the first exemplary embodiment
[FIG. 7] A flow chart illustrating path registration operation in the communication system as the first exemplary embodiment
[FIG. 8] A diagram showing a specific example of a configuration of the communication system as the first exemplary embodiment
[FIG. 9] A diagram showing an example of information stored in the resource information storage unit before path registration, in a specific example of the first exemplary embodiment
[FIG. 10] A diagram showing an example of a primary path stored in the path information storage unit, in the specific example of the first exemplary embodiment
[FIG. 11] A diagram showing an example of information updated in the resource information storage unit at a time of primary path registration, in the specific example of the first exemplary embodiment
[FIG. 12] A diagram schematically showing the primary path registered in the specific example of the first exemplary embodiment
[FIG. 13] A diagram showing an example of a backup path for the primary path, which is stored in the path information storage unit, in the specific example of the first exemplary embodiment
[FIG. 14] A diagram showing an example of information updated in the resource information storage unit at a time of backup path registration, in the specific example of the first exemplary embodiment
[FIG. 15] A diagram schematically showing the primary and backup paths registered in the specific example of the first exemplary embodiment
[FIG. 16] A diagram showing an example of another primary path stored in the path information storage unit, in the specific example of the first exemplary embodiment
[FIG. 17] A diagram showing an example of information updated in the resource information storage unit when the another primary path is registered, in the specific example of the first exemplary embodiment
[FIG. 18] A diagram schematically showing the another primary path registered in the specific example of the first exemplary embodiment
[FIG. 19] A diagram showing an example of a backup path for the another primary path, which is stored in the path information storage unit, in the specific example of the first exemplary embodiment
[FIG. 20] A diagram schematically showing a group of paths registered in the specific example of the first exemplary embodiment
[FIG. 21] A block diagram showing a configuration of a communication system as a second exemplary embodiment of the present invention
[FIG. 22] A functional block diagram of the communication system as the second exemplary embodiment
[FIG. 23] A diagram showing an example of information stored in a path information storage unit in the second exemplary embodiment
[FIG. 24] A diagram showing an example of information stored in a resource information storage unit in the second exemplary embodiment [FIG. 25] A flow chart illustrating path switching operation in the communication system as the second exemplary embodiment
[FIG. 26] A diagram showing an example of information updated in the resource information storage unit at a time of path switching, in a specific example of the second exemplary embodiment
[FIG. 27] A diagram showing an example of information updated in the path information storage unit at the time of path switching, in the specific example of the second exemplary embodiment
[FIG. 28] A diagram schematically showing a group of paths after the path switching, in the specific example of the second exemplary embodiment

### [Description of Embodiments]

Hereinafter, exemplary embodiments of the present invention will be described in detail, with reference to drawings.

### (first exemplary embodiment)

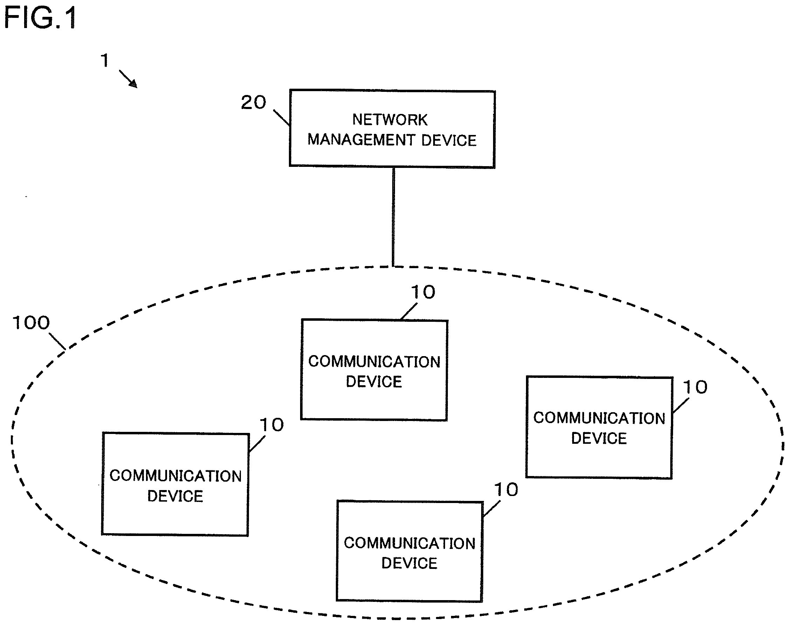

FIG. 1 shows a configuration of a communication system 1 as a first exemplary embodiment of the present invention. In FIG. 1, the communication system 1 includes communication devices 10 and a network management device 20. Hereafter, the communication devices 10 will be described also as nodes 10. The network management device 20 is communicably connected with a network 100 consisting of the plurality of nodes 10. In the network 100, each of the nodes 10 is communicably connected with one or more of the other nodes 10. While four communication devices 10 and one network management device 20 are illustrated in FIG. 1, it is not intended to limit the number of the devices in the communication system of the present invention by the illustration.

The nodes 10 are each a communication device for performing multiplex communication, which has a cross-connect function. The cross-connect function is a function to perform route settings between a plurality of multiplexed input/output signals in an optional manner. That is, each of the nodes 10 sets, with respect to each multiplexed signal inputted to it, to which one of the other nodes 10 the signal should be outputted by using which communication resource, based on from which one of the other nodes 10 the signal has been inputted, then multiplexes the signals in terms of each route according to the settings, and outputs the multiplexed signals. Here, the communication resource is referred to as a resource used for logically dividing a physical transmission line in multiplex communication. For example, as such a communication resource, a time slot in a TDM (Time Division Multiplex) network and a wavelength in a WDM (Wavelength Division Multiplex) network are mentioned. In each of the nodes 10, one or more communication resources capable of being used for communications with the other nodes are installed in advance.

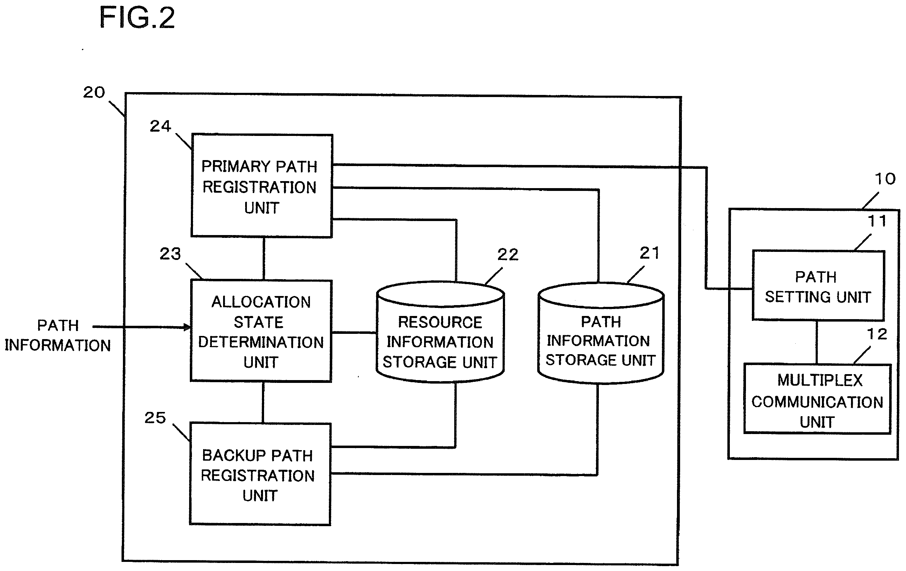

Next, a functional block diagram of the devices constituting the communication system 1 is shown in FIG. 2. In FIG. 2, the node 10 includes a path setting unit 11 and a multiplex communication unit 12. The network management device 20 includes a path information storage unit 21, a resource information storage unit 22, an allocation state determination unit 23, a primary path registration unit 24 and a backup path registration unit 25.

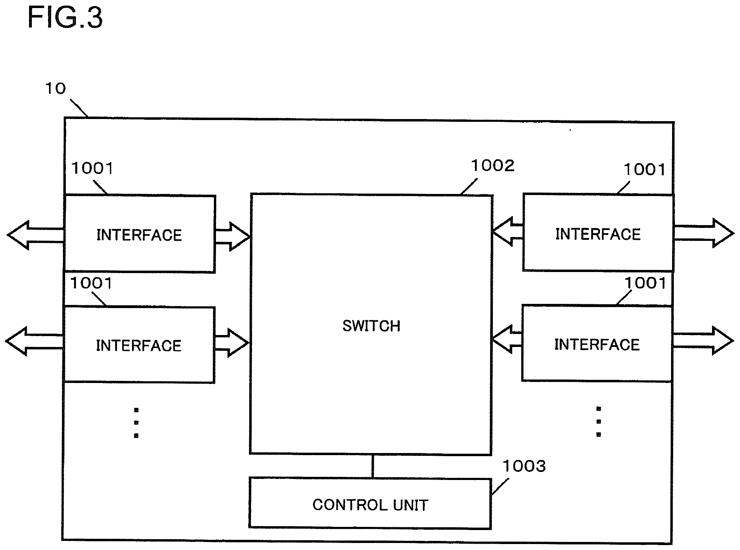

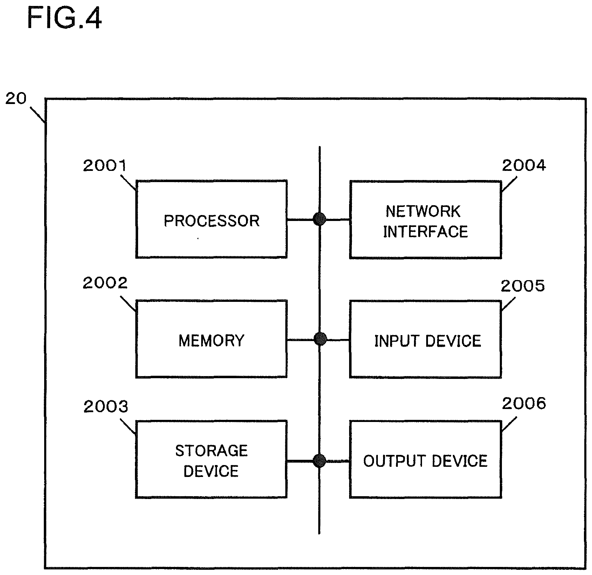

Here, an example of a hardware configuration is shown for each of the devices constituting the communication system 1 in FIGS. 3 and 4.

FIG. 3 is a diagram showing an example of a hardware configuration of the communication device (node) 10. In FIG. 3, the node 10 comprises one or more interfaces 1001, a switch 1002 and a control unit 1003 including a processor and a memory.

The interfaces 1001 are each connected with another one of the nodes 10, the network management device 20 or another external device, via a link. Each of the interfaces 1001 demultiplexes a multiplexed signal inputted via the link and outputs the demultiplexed signals to the switch 1002. Each of the Interfaces 1001 also multiplexes signals inputted from the switch 1002 and outputs the multiplexed signal via the link.

The switch 1002 performs route setting on a signal inputted from each of the interfaces 1001 and accordingly outputs the signal to an appropriate one of the interfaces 1001.

In the memory of the control unit 1003, a computer program and various kinds of data for causing the device to function as the node 10 of the present exemplary embodiment are stored. By reading and executing the computer program and various kinds of data stored in the memory, the control unit 1003 controls the route setting performed by the switch 1002. The path setting unit 11 described above is constituted by the control unit 1003. The multiplex communication unit 12 is constituted by the interfaces 1001 and the switch 1002. Here, hardware configurations for constructing the node 10 and its functional blocks are not limited to those described above.

FIG. 4 is a diagram showing an example of a hardware configuration of the network management device 20. In FIG. 4, the network management device 20 comprises a processor 2001, a memory 2002, a storage device 2003 such as a hard disk, a network interface 2004, an input device 2005 and an output device 2006.

In the storage device 2003, a computer program and various kinds of data for causing the device to function as the network management device 20 of the present exemplary embodiment are stored.

By reading, into the memory 2002, and executing the computer program and various kinds of data stored in the storage device 2003, the processor 2001 manages communications in the communication system 1.

The network interface 2004 communicates with the nodes 10 via the network 100.

The path information storage unit 21 and the resource information storage unit 22, described above, are constituted by the storage device 2003. The allocation state determination unit 23 is constituted by the input device 2005 and the processor 2001. The primary path registration unit 24 is constituted by the network interface 2004 and the processor 2001. The backup path registration unit 25 is constituted by the processor 2001. The processor 2001 constituting the above-mentioned units reads, into the memory 2002, and executes the computer program and various kinds of data stored in the storage device 2003. Here, hardware configurations for constructing the network management device 20 and its functional blocks are not limited to those described above.

Further, the network management device 20 does not necessarily need to be connected with every one of the nodes 10 in a directly communicable manner. The network management device 20 may communicate with every one of the node 10 by being connected with only any one of the nodes 10. Alternatively, the network management devices 20 may be connected with the network 100 consisting of the nodes 10 via another network.

Next, details of the functional blocks of the node 10 will be described.

The path setting unit 11 sets a working path into the own communication device, based on information notified from the network management device 20. Specifically, from the network management device 20, the path setting unit 11 receives information representing a route of the working path and information representing a communication resource to be used for the path. Then, the path setting unit 11 sets a path in such a way that a signal inputted using the notified communication resource from one of the nodes 10 neighboring the own communication device on the notified route is outputted using the notified communication resource to the other one of the neighboring nodes 10.

Based on the setting performed by the path setting unit 11, the multiplex communication unit 12 performs multiplex communication with the other nodes 10.

Next, details of the functional blocks of the network management device 20 will be described.

The path information storage unit 21 stores path information about a communication route (path) between any two of the nodes 10 (end nodes). Specifically, the path information storage unit 21 stores path information including pieces of information representing, respectively, a primary or backup communication route (path) between the two nodes and one or more communication resources allocated to the path. Here, the backup path is a different communication route from the primary path, between the end nodes.

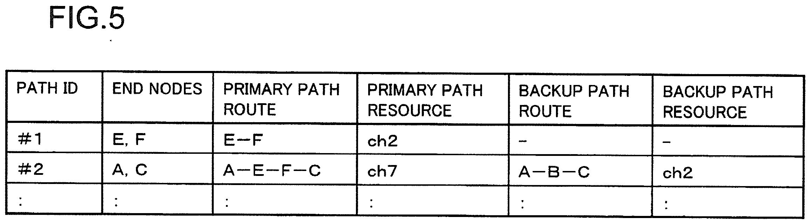

For example, FIG. 5 shows an example of path information stored in the path information storage unit 21. In FIG. 5, each row represents a piece of path information. In the example, each piece of path information consists of a path ID, end point information, primary path route information, primary path resource information, backup path route information and backup path resource information.

The path ID is information for identifying a path. In the example shown in FIG. 5, the path ID is denoted as #N. Hereafter, a path represented by the path ID #N will be described also as a path #N. N is a natural number.

The end point information represents two end nodes. In the example shown in FIG. 5, the end point information about the path #2, "A, C", indicates that the identifiers of the nodes 10 corresponding to the end points are "A" and "C", respectively. Hereafter, a node 10 whose identifier is "X" will be described also as a node 10X.

In the example in FIG. 5, the primary path route information about the path #2, "A-E-F-C", indicates a primary communication route between the nodes 10A and 10C corresponding to the end nodes. In the example, the primary path route information is expressed as a list in which pieces of identification information about respective ones of nodes 10 on the primary path are lined up in order.

Also in the example in FIG. 5, the primary path resource information about the path #2, "ch7", indicates that communication resources of channel 7 (ch7) are allocated to the primary path. Specifically, the primary path resource information indicates that three communication resources corresponding to, respectively, ch7 in a link "A-E", ch7 in "E-F" and ch7 in "F-C" are allocated to the primary path "A-E-F-C". Here, the link "X-Y" denotes a link connecting between nodes 10X and 10Y.

Also in the example in FIG. 5, the backup path route information about the path #2, "A-B-C", indicates another communication route between the nodes 10A and 10C corresponding to the end nodes, which is different from the primary path. In the example, the backup path route information also is expressed as a list in which pieces of identification information about respective ones of nodes 10 on the route are lined up in order, similarly to the primary path route information.

Further in the example in FIG. 5, the backup path resource information about the path #2, "ch2", indicates that communication resources of channel 2 (ch2) are allocated to the backup path. Specifically, the backup path resource information indicates that two communication resources corresponding to, respectively, ch2 in a link "A-B" and ch2 in "B-C" are allocated to the backup path "A-B-C".

The resource information storage unit 22 stores allocation state information about each communication resource. For example, it is assumed that, in the network 100, there are N-number of links connecting between the nodes 10. It is further assumed that n-number of communication resources are installed at each of the nodes 10. The n is a natural number. In that case, the resource information storage unit 22 stores allocation state information about each of n-number of communication resources in each of the N-number of links. The allocation state information represents an allocation state of the corresponding communication resource to a path. For example, the allocation state information may be information indicating any one among a shared resource, a dedicated resource and an unallocated resource. Here, the shared resource is a communication resource which can be allocated to a plurality of backup paths in a shared manner. The dedicated resource is a communication resource which has been allocated dedicatedly to a single primary path. The unallocated resource is a communication resource which has not yet been allocated to any path.

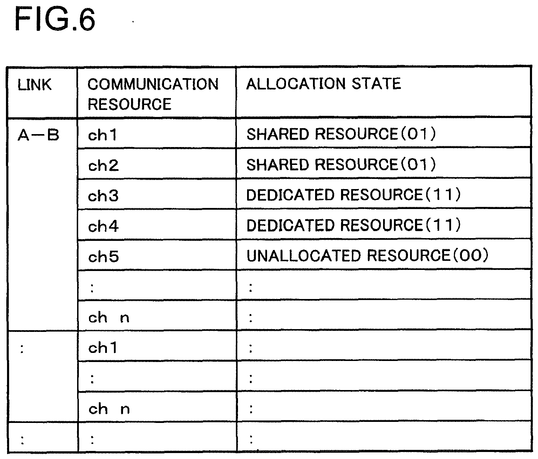

For example, FIG. 6 shows an example of allocation state information stored in the resource information storage unit 22. In FIG. 6, for example, the first to n-th rows represent pieces of allocation state information about respective ones of n-number of communication resources (chl to ch-n) which can be used in the link "A-B" between the nodes 10A and 10B. In the example shown in FIG. 6, the communication resources ch1 and ch2 in the link "A-B" are shared resources. The communication resources ch3 and ch4 in the link "A-B" are dedicated resources. The communication resource ch5 in the link "A-B" is an unallocated resource. Here, the resource information storage unit 22 may store allocation state information expressed by 2 bits about each communication resource in each link. For example, as shown in FIG. 6, shared resources may be expressed by "01", dedicated resources by "11", and unallocated resources by "00". The allocation state information may be information having any other form which can express an allocation state of each of the communication resources to paths.

When path information to be registered has been inputted, the allocation state determination unit 23 determines allocation states of one or more communication resources to be allocated to a path indicated by the path information, by referring to the resource information storage unit 22.

Here, the allocation state determination unit 23 may acquire path information via the input device 2005. Alternatively, the allocation state determination unit 23 may acquire path information from an operator terminal (not illustrated) which is communicably connected.

The primary path registration unit 24 is configured such that it functions if the inputted path information represents a primary path to be registered. In the path information representing a primary path to be registered, information on a route as the primary path and information representing communication resources expected to be allocated to the primary path are included.

The primary path registration unit 24 performs the following process, if the allocation state determination unit 23 determines that allocation states of one or more communication resources expected to be allocated to the primary path to be registered indicate that none of the communication resources is allocated to any other path. For example, when every one of the one or more communication resources expected to be allocated to the primary path to be registered is an unallocated resource, the primary path registration unit 24 may perform the following process.

Specifically, the primary path registration unit 24 notifies each node 10 on the inputted primary path to set up a route based on the path information. For example, the primary path registration unit 24 may send each of the corresponding nodes 10 a message for requesting the node 10 to set the cross-connect such that a signal inputted from one of the nodes 10 neighboring it on the primary path using the corresponding communication resource is outputted to the other one of the neighboring nodes 10 using the corresponding communication resource.

When the primary path registration unit 24 has succeeded in the route setting of the primary path, it registers path information representing the inputted primary path, into the path information storage unit 21. For example, the primary path registration unit 24 may register path information with a new path ID assigned to it, in which information representing the route of the inputted primary path and information representing the communication resources are set for, respectively, the primary path route information and the primary path resource information in the registered path information.

Also when having succeeded in the route setting of the primary path, the primary path registration unit 24 updates the resource information storage unit 22. For example, the primary path registration unit 24 may update allocation state information about each of the communication resources allocated to the primary path to indicate "dedicated resource".

If at least any one of the one or more communication resources expected to be allocated to the inputted primary path has already been allocated to any other path (for example, when it is a dedicated resource or a shared resource), the primary path registration unit 24 does not perform route setting and registration of the primary path. In that case, for example, the primary path registration unit 24 may output a message indicating that the communication resource has already been allocated to another path and accordingly cannot be allocated as a dedicated resource to the primary path, to the output device 2006.

The backup path registration unit 25 is configured such that it functions if inputted path information represents a backup path to be registered. In the path information representing a backup path to be registered, information on a route as the backup path and information representing communication resources expected to be allocated to the backup path are included. Also in the path information representing a backup path to be registered, information about a path ID and end nodes may be included, as information enabling identification of a primary path for which the backup path is to be set.

The backup path registration unit 25 performs the following process, if the allocation state determination unit 23 determines that allocation states of one or more communication resources expected to be allocated to the backup path to be registered indicate that none of the communication resources is allocated to any other primary path. For example, when every one of the one or more communication resources expected to be allocated to the backup path to be registered is a shared or unallocated resource, the backup path registration unit 25 may perform the following process.

Specifically, the backup path registration unit 25 registers path information representing the backup path into the path information storage unit 21. To be precise, the backup path registration unit 25 searches the path information storage unit 21 for path information including a primary path corresponding to the inputted backup path. Then, for backup path route information and backup path resource information in thus extracted path information, the backup path registration unit 25 may set information representing the route of the inputted backup path and information representing the communication resources, respectively.

Further, the backup path registration unit 25 updates the resource information storage unit 22. For example, the backup path registration unit 25 may update allocation state information about each of the communication resources allocated to the backup path to indicate "shared resource".

Here, in the backup path registration, the backup path registration unit 25 does not notify each node 10 on the route to set up the route.

If at least any one of the one or more communication resources expected to be allocated to the inputted backup path has already been allocated to any other primary path (for example, when it is a dedicated resource), the backup path registration unit 25 does not perform registration of the backup path. In that case, for example, the backup path registration unit 25 may output a message indicating that the communication resource has already been allocated to another primary path and accordingly cannot be allocated as a shared resource to the backup path, to the output device 2006.

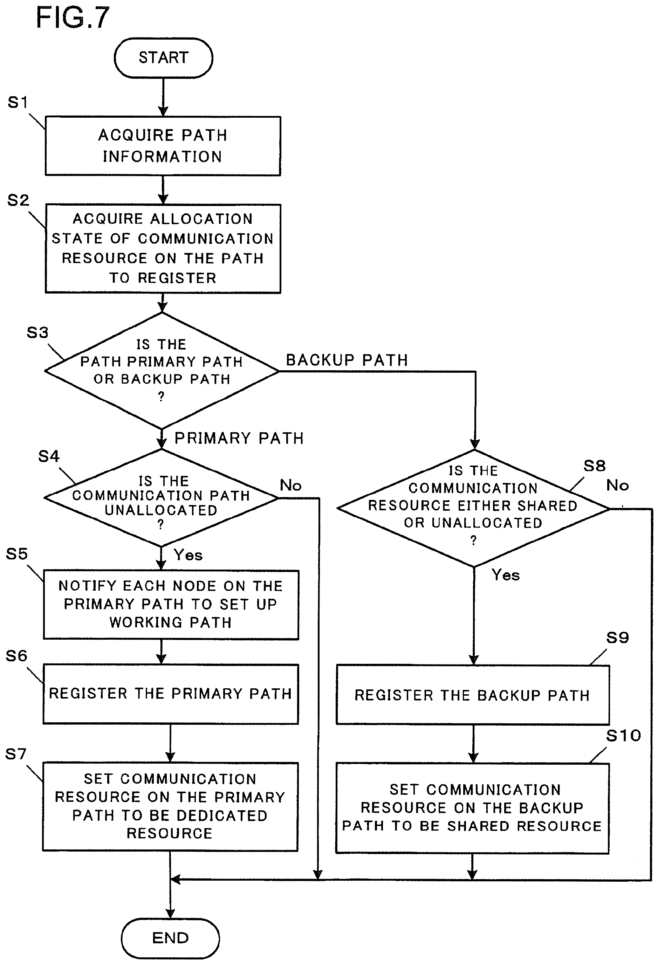

Next, a description will be given of path registration operation in the communication system 1 configured as described above, with reference to FIG. 7. FIG. 7 is a flow chart illustrating the path registration operation performed in the communication system of the first exemplary embodiment.

First, the allocation state determination unit 23 acquires path information to be registered, which is inputted from outside (step S1). In the path information inputted there, at least information representing a route of a primary or backup path and information representing one or more communication resources expected to be allocated to the path are included. Here, as already descried above, when the inputted path information represents a backup path to be registered, the inputted path information may include information about a path ID, end nodes or the like enabling identification of the corresponding primary path.

Next, the allocation state determination unit 23 acquires allocation state information about the one or more communication resources acquired in the step S1, from the resource information storage unit 22 (step S2).

Then, the allocation state determination unit 23 determines which one between a primary path to be registered and a backup path to be registered the path information acquired in the step S1 represents (step S3).

Here, if having determined that the path information represents a primary path to be registered (primary path at the step S3), the allocation state determination unit 23 subsequently determines whether or not allocation states of the communication resources acquired in the step S2 indicate that none of the communication resources is allocated to any other paths (step S4).

For example, when allocation state information is denoted by 2-bit information such that unallocated resources are expressed by "00", shared resources are expressed by "01", and dedicated resources are expressed by "11", the allocation state determination unit 23 may determine whether or not each of the communication resources is an unallocated resource, not allocated to any other path, by whether the most significant bit (left bit) is 0 or not.

Here, if at least any one of the communication resources is determined to have already been allocated to another path (NO at the step S4), the primary path registration unit 24 determines that the inputted primary path cannot be registered, and accordingly ends the operation. In that case, the primary path registration unit 24 may output a message indicating that the communication resource cannot be allocated to the primary path.

On the other hand, if it is determined, in the step S4, that none of the communication resources has already been allocated to any other path (YES at the step S4), the primary path registration unit 24 notifies each node 10 on the inputted primary path to set up a route based on the path information (step S5).

Next, the primary path registration unit 24 registers path information representing the primary path, into the path information storage unit 21 (step S6). For example, the primary path registration unit 24 registers path information with a new path ID assigned to it, in which information representing the route of the inputted primary path is set for the primary path route information, and information representing the inputted one or more communication resources is set for the primary path resource information.

Next, the primary path registration unit 24 updates allocation state information stored in the resource information storage unit 22, with respect to the one or more communication resources having been allocated to the primary path registered in the step S6 (step S7). For example, the primary path registration unit 24 may update the allocation state information about each of the communication resources to indicate "dedicated resource".

Here, if it has not succeeded in the route setting for a primary path in the step S5, the primary path registration unit 24 ends the operation without executing the steps S6 to S7. In that case, the primary path registration unit 24 may output a message indicating that the route setting of a primary path failed.

On the other hand, if it is determined, in the step S3, that the path information acquired in the step S1 represents a backup path to be registered (backup path at the step S3), the allocation state determination unit 23 determines whether or not allocation states of the communication resources acquired in the step S2 indicate that none of the communication resources is allocated to any other primary path (step S8).

For example, when the allocation state information is denoted by 2-bit information already described above, the allocation state determination unit 23 may determine whether or not each of the communication resources is a shared or unallocated resource, not allocated to any other primary path, by whether the second most significant bit (right bit) is 0 or not.

Here, if at least any one of the communication resources is determined to have already been allocated to another primary path (for example, it is a dedicated resource) (NO at the step S8), the backup path registration unit 25 determines that the inputted backup path cannot be registered, and accordingly ends the operation. In that case, the backup path registration unit 25 may output a message indicating that the communication resource cannot be allocated to the backup path.

On the other hand, if it is determined, in the step S8, none of the communication resources has already been allocated to any other primary path (YES at the step S8), the backup path registration unit 25 registers path information representing the backup path into the path information storage unit 21 (step S9). For example, the backup path registration unit 25 searches the path information storage unit 21 for path information to which a path ID included in the path information inputted in the step S1 was assigned. Then, the backup path registration unit 25 sets information representing the route of the inputted backup path for the backup path route information in thus extracted path information, and also sets information representing the inputted one or more communication resources for the backup path resource information in the path information.

Next, the backup path registration unit 25 updates allocation state information stored in the resource information storage unit 22, with respect to each of the communication resources having been allocated to the backup path registered in the step S9 (step S10). For example, the backup path registration unit 25 may update allocation state information about each of the communication resources to indicate "shared resource".

With these steps, the communication system 1 ends the path registration operation.

Next, operations in the communication system 1 will be described taking a specific example.

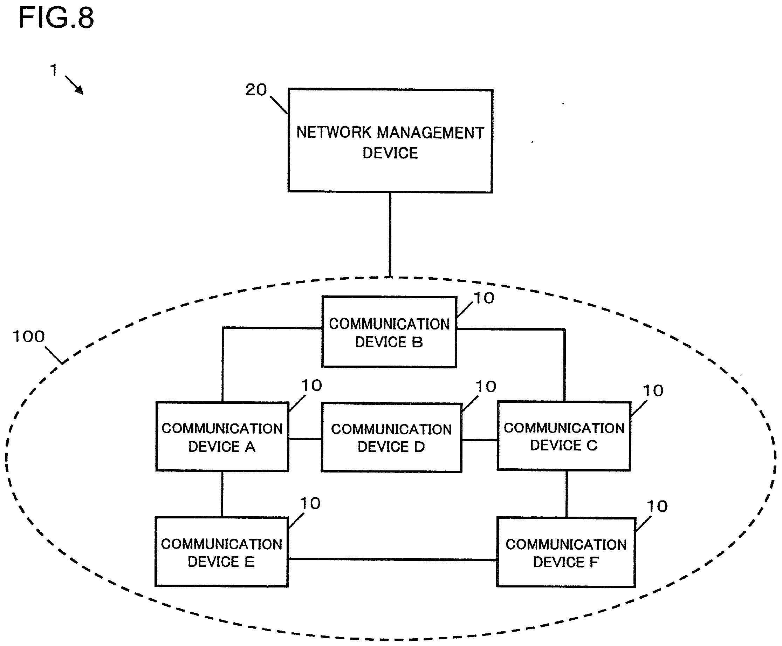

First, a configuration of the communication system 1, which will be described in the present specific example, is shown in FIG. 8. In FIG. 8, the communication system 1 includes six nodes 10 having respective ones of identifiers "A" to "F" and the network management device 20. Solid lines connecting between the nodes 10A to 10F represent links connecting between the nodes 10. That is, in the present example, there are seven links between the nodes 10. Also in the present example, each of the nodes 10 has 88 channels of communication resources, from ch1 to ch88, and can have 88 paths registered relevant to it.

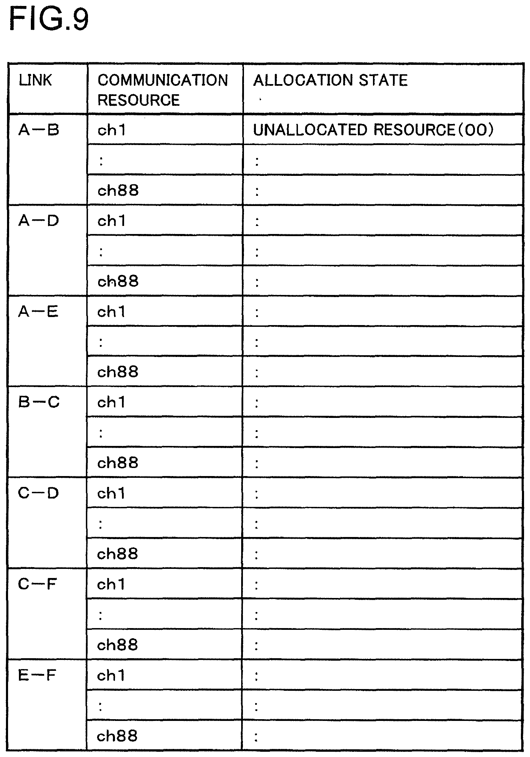

In that case, the resource information storage unit 22 stores allocation state information about each of 88 communication resources able to be used in each of the 7 links in communications performed via the links. FIG. 9 shows an example of information stored in the resource information storage unit 22, in the present specific example. In FIG. 9, every communication resource is shown to be an unallocated resource, because no path has been registered yet.

Hereinafter, descriptions will be given of operations, in the specific example, by which the network management device 20 registers primary and backup paths between the nodes 10E and 10F, and those between the nodes 10A and 10C. Steps referred to in the following descriptions of the specific example represent respective corresponding steps illustrated in FIG. 7.

### <registration operation on primary path between nodes 10E and 10F>

First, a description will be given of operation by which the network management device 20 registers a primary path between the nodes 10E and 10F.

Here, first, the allocation state determination unit 23 acquires information representing a route "E-F" as a primary path to be registered and information representing a communication resource "ch2" expected to be allocated to the primary path (step S1).

Next, the allocation state determination unit 23 acquires allocation state information about the communication resource "ch2" in the link "E-F" on the path "E-F", from the resource information storage unit 22 (step S2). Here, it is assumed that the allocation state determination unit 23 has acquired information indicating "unallocated resource" from the information shown in FIG. 9 which is stored in the resource information storage unit 22.

Because the inputted path information represents a primary path to be registered ("primary path" at the step S3) and the communication resource expected to be allocated to the primary path is "unallocated resource" (YES at the Step S4), the operation by the network management device 20 proceeds to the step S5.

That is, the primary path registration unit 24 notifies the nodes 10E and 10F on the inputted primary path "E-F" to set up a route for the primary path "E-F" using ch2 (step S5). Accordingly, the nodes 10E and 10F perform the route setting for the primary path "E-F" using ch2.

Then, the primary path registration unit 24 registers, into the path information storage unit 21, path information with a new ID "#1" assigned to it, in which "E-F" is then set for the primary path route information and "ch2" is set for the primary path resource information (step S6).

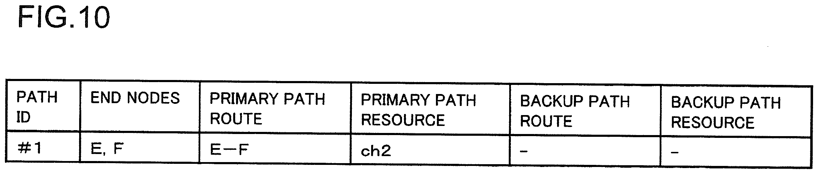

As a result, information shown in FIG. 10 is stored in the path information storage unit 21.

Then, with respect to the communication resource "ch2" allocated to the link "E-F" on the primary path "E-F", the primary path registration unit 24 updates allocation state information stored in the resource information storage unit 22 to indicate "dedicated resource" (step S7).

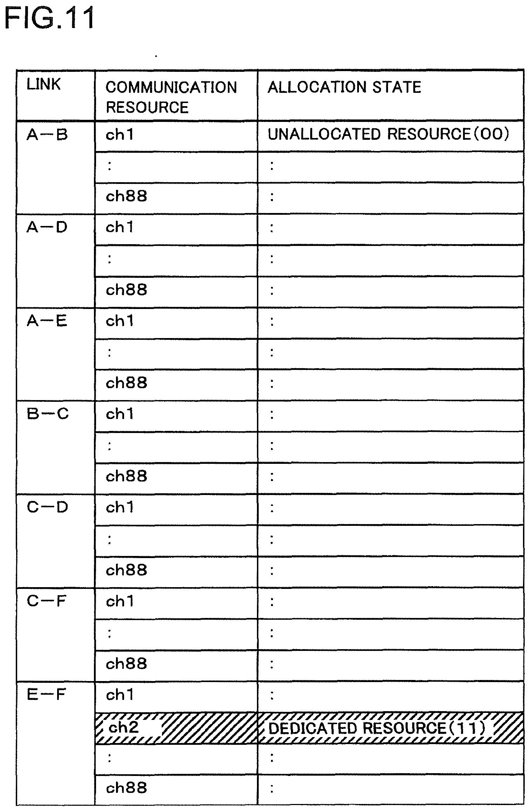

As a result, information shown in FIG. 11 is stored in the resource information storage unit 22. In FIG. 11, the information having been updated, in the resource information storage unit 22, is displayed in bold-face type.

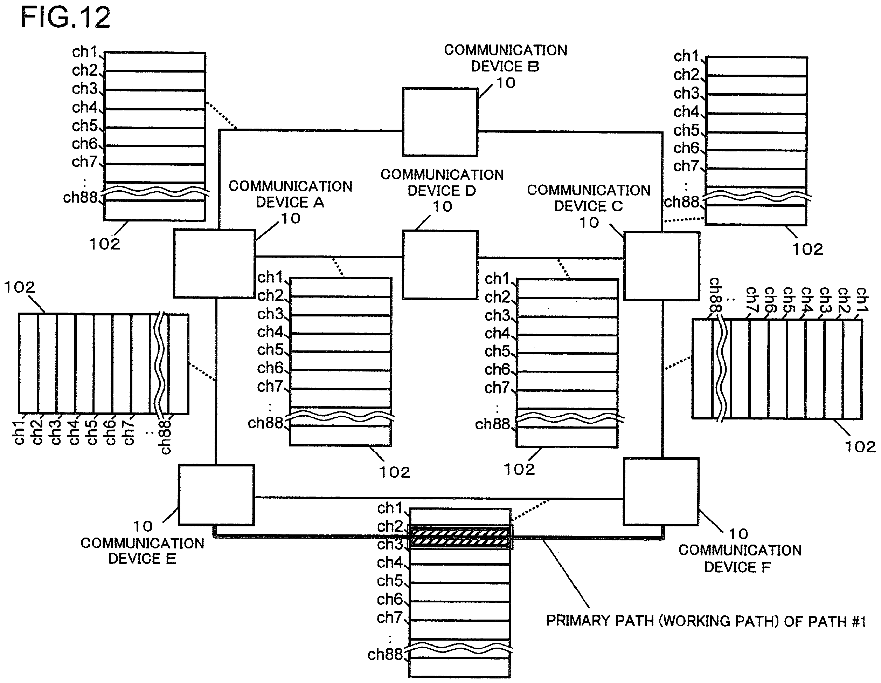

FIG. 12 schematically shows a state where the primary path "E-F" for the path #1 has been set, in the above-described way, as the working path. In FIG. 12, in each link, rectangles with reference signs ch1 to ch88 respectively assigned to them represent 88 communication resources able to be used in the link. Also there, the rectangle filled with slanted lines represents "dedicated resource". Further, the rectangle enclosed with a double line represents a communication resource used by the corresponding nodes 10 in the corresponding link. That is, in FIG. 12, the communication resource "ch2" in the link "E-F" is in a state of being a dedicated resource and being currently used by the nodes 10E and 10F.

### <registration operation on backup path between nodes 10E and 10F>

Next, a description will be given of operation by which the network management device 20 registers a backup path for the primary path between the nodes 10E and 10F.

In the present case, first, the allocation state determination unit 23 acquires information representing a route "E-A-B-C-F" as a backup path to be registered for the path #1 and information representing a communication resource "ch2" expected to be allocated to the backup path (step S1).

Next, the allocation state determination unit 23 acquires allocation state information about the communication resource "ch2" in each link on the path "E-A-B-C-F", from the resource information storage unit 22 (step S2). Here, it is assumed that the allocation state determination unit 23 has acquired, from the information shown in FIG. 11 which is stored in the resource information storage unit 22, information indicating "unallocated resource" about the communication resource "ch2" in each of the links "E-A", "A-B", "B-C" and "C-F".

Because the inputted path information represents a backup path to be registered ("backup path" at the step S3) and every one of the communication resources expected to be allocated to the backup path is "unallocated resource" (YES at the Step S8), the operation by the network management device 20 proceeds to the step S9.

That is, the backup path registration unit 25 sets, in the path information storage unit 21, "E-A-B-C-F" for the backup path route information in the path information about the path #1, and also sets "ch2" for the backup path resource information (step S9).

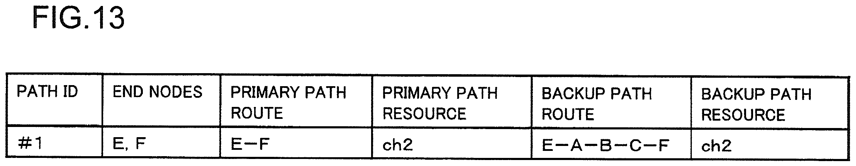

As a result, information shown in FIG. 13 is stored in the path information storage unit 21.

Then, with respect to the communication resource "ch2" allocated to each of the links on the backup path "E-A-B-C-F", the backup path registration unit 25 updates allocation state information stored in the resource information storage unit 22 to indicate "shared resource" (step S10).

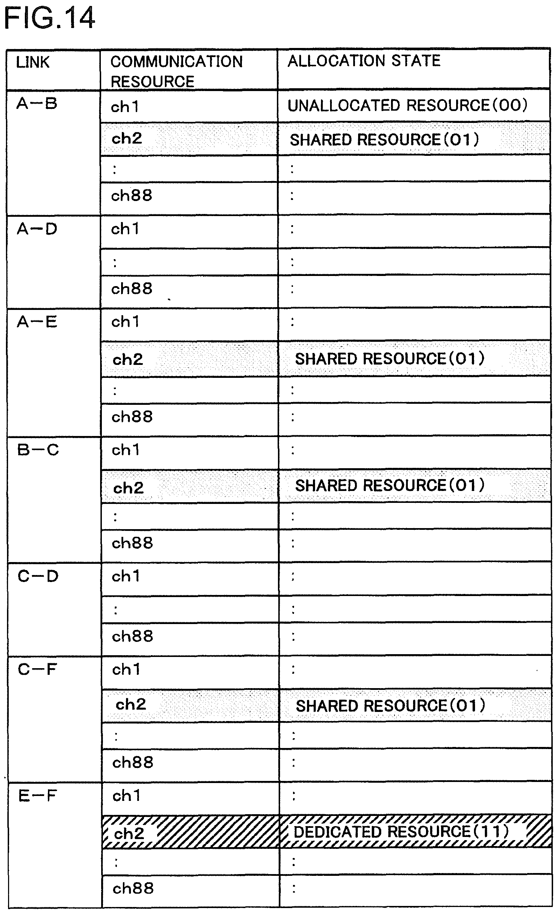

As a result, information shown in FIG. 14 is stored in the resource information storage unit 22.

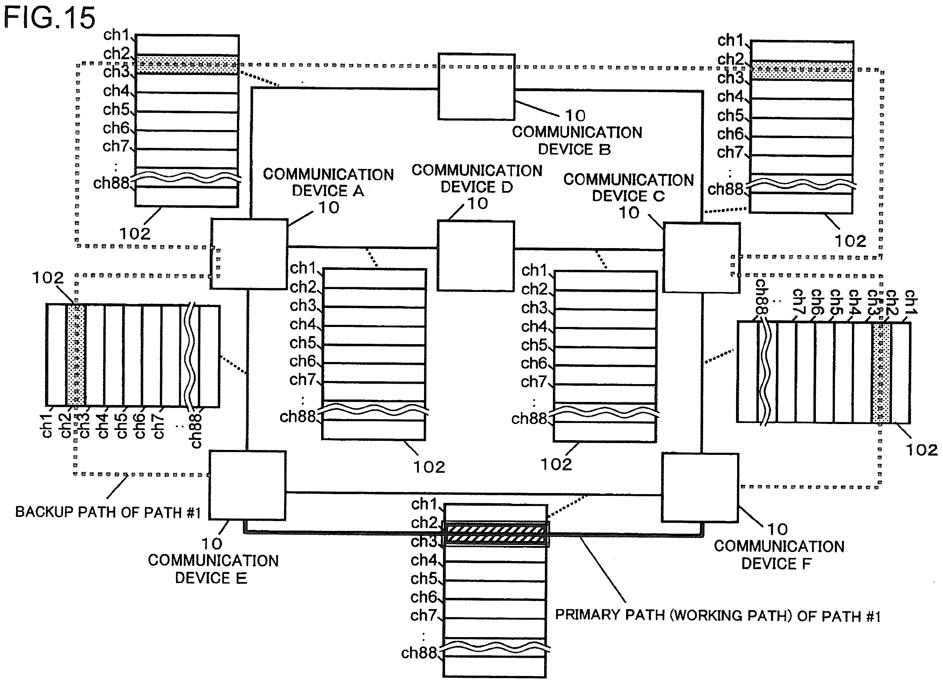

FIG. 15 schematically shows a state where the backup path "E-A-B-C-F" using ch2 has been secured for the path #1 in the above-described way. In FIG. 15 or later drawings, a rectangle filled with a dot pattern represents "shared resource". That is, in FIG. 15, the communication resource "ch2" in each of the links "E-A", "A-B", "B-C" and "C-F" is a shared resource. Here, the communication resource "ch2" in each of the links is in a state of being managed as a shared resource in the resource information storage unit 22 of the network management device 20 but being not used currently by the corresponding nodes 10.

### registration operation on primary path between nodes 10A and 10C>

Next, a description will be given of operation by which the network management device 20 registers a primary path between the nodes 10A and 10C.

First, the allocation state determination unit 23 acquires information representing a route "A-E-F-C" as a primary path to be registered and information representing a communication resource "ch7" expected to be allocated to the primary path (step S1).

Next, the allocation state determination unit 23 acquires allocation state information about the communication resource "ch7" in each link on the path "A-E-F-C", from the resource information storage unit 22 (step S2). Here, it is assumed that the allocation state determination unit 23 has acquired from the information shown in FIG. 14 which is stored in the resource information storage unit 22, information indicating "unallocated resource" about the communication resource "ch7" in each of the links "A-E", "E-F" and "F-C".

Because the inputted path information represents a primary path to be registered ("primary path" at the step S3) and every one of the communication resources expected to be allocated to the primary path is "unallocated resource" (YES at the Step S4), the operation by the network management device 20 proceeds to the step S5.

That is, the primary path registration unit 24 notifies the nodes 10A, 10E, 10F and 10C on the inputted primary path to set up a route for the primary path "A-E-F-C" (step S5). Accordingly, each of the nodes 10A, 10E, 10F and 10C sets up a route for communication using ch7 with neighboring ones of the other nodes 10.

Then, the primary path registration unit 24 registers, into the path information storage unit 21, path information with a new ID "#2" assigned to it, in which "A-E-F-C" is then set for the primary path route information and "ch7" is set for the primary path resource information (step S6).

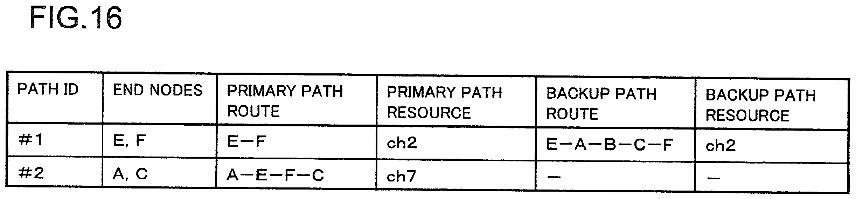

As a result, information shown in FIG. 16 is stored in the path information storage unit 21.

Then, with respect to the communication resource "ch7" in each of the links on the primary path "A-E-F-C", the primary path registration unit 24 updates allocation state information stored in the resource information storage unit 22 to indicate "dedicated resource" (step S7).

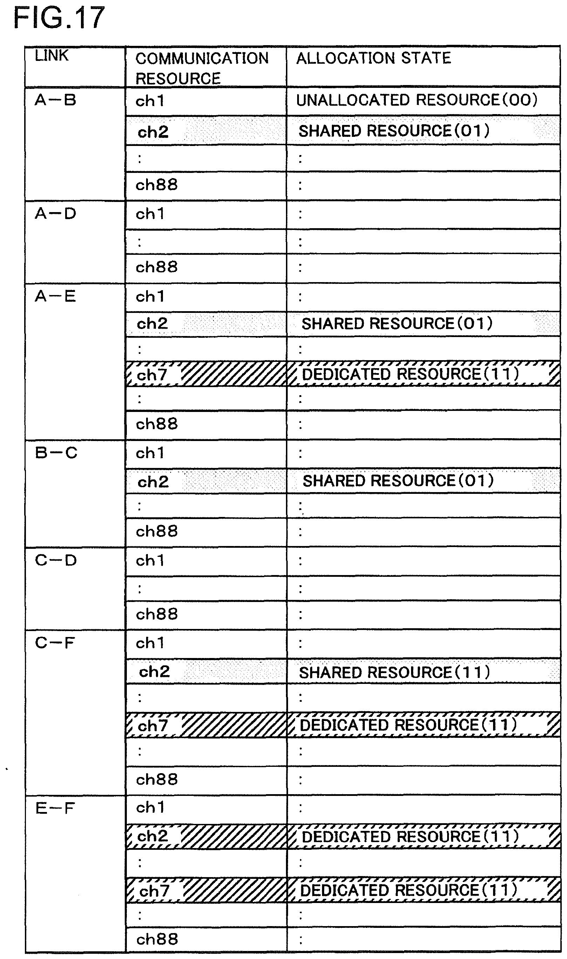

As a result, information shown in FIG. 17 is stored in the resource information storage unit 22.

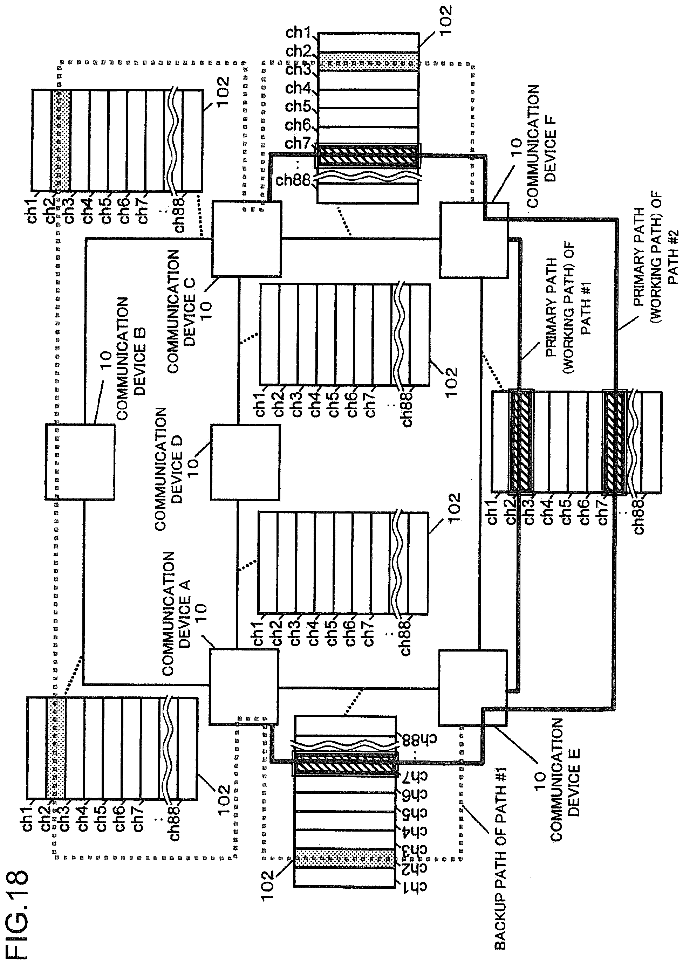

FIG. 18 schematically shows a state where the primary path for the path #2 has been set as the working path in the above-described way, in addition to the primary path (working path) for the path #1 and its backup path. In FIG. 18, the communication resource "ch7" in each of the links "A-E", "E-F" and "F-C" is in a state of being a dedicated resource and being currently used by the corresponding nodes 10.

### <registration operation on backup path between nodes 10A and 10C>

Next, a description will be given of operation by which the network management device 20 registers a backup path for the primary path between the nodes 10A and 10C.

First, the allocation state determination unit 23 acquires information representing a route "A-B-C" as a backup path to be registered for the path #2 and information representing a communication resource "ch2" expected to be allocated to the backup path (step S1).

Next, the allocation state determination unit 23 acquires allocation state information about the communication resource "ch2" in each link on the path "A-B-C", from the resource information storage unit 22 (step S2). Here, it is assumed that the allocation state determination unit 23 has acquired, from the information shown in FIG. 17 which is stored in the resource information storage unit 22, information indicating "shared resource" about the communication resource "ch2" in each of the links "A-B" and "B-C".

Because the inputted path information represents a backup path to be registered ("backup path" at the step S3) and every one of the communication resources expected to be allocated to the backup path is "shared resource" (YES at the Step S8), the operation by the network management device 20 proceeds to the step S9.

That is, the backup path registration unit 25 sets, in the path information storage unit 21, "A-B-C" for the backup path route information in the path information about the path #2, and also sets "ch2" for the backup path resource information (step S9).

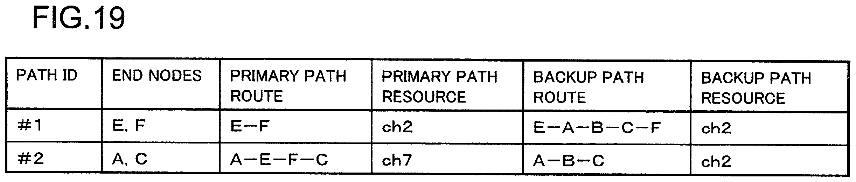

As a result, information shown in FIG. 19 is stored in the path information storage unit 21.

Then, with respect to the communication resource "ch2" allocated to each of the links on the backup path "A-B-C", the backup path registration unit 25 updates allocation state information stored in the resource information storage unit 22 to indicate "shared resource" (step S10). In the present case, allocation state information about the communication resource "ch2" in each of the links "A-B" and "B-C" was already set to indicate "shared resource" before the update. In that case, the backup path registration unit 25 does not necessarily need to update the allocation state information.

Accordingly, the information stored in the resource information storage unit 22 at the present stage is the same as that shown in FIG. 17.

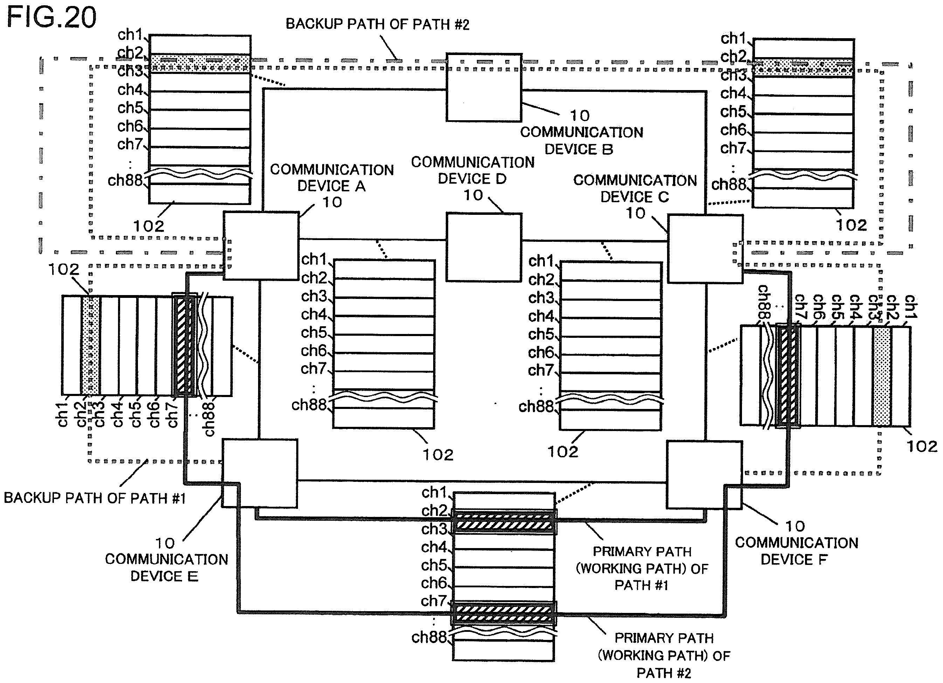

FIG. 20 schematically shows a state where the backup path "A-B-C" using ch2 has been secured for the path #2 in the above-described way. As shown in FIG. 20, in the links "A-B" and "B-C", ch2 is allocated in a shared manner to the backup paths for respective ones of the paths #1 and #2.

Thus, the description of the specific example has been completed.

Next, advantageous effects of the first exemplary embodiment of the present invention will be described.

The communication system as the first exemplary embodiment of the present invention can manage communication resources for a detour path for a path in a network consisting of a plurality of nodes, in a manner to utilize the communication resources efficiently.

The reason is that: the resource information storage unit of the network management device stores, about each communication resource in the network, allocation state information representing its allocation state to a path, and the allocation state determination unit determines the allocation states of communication resources expected to be allocated to an inputted path; specifically, if the allocation state determination unit determines that none of communication resources expected to be allocated to respective links on a primary path to be registered has not been allocated to any other registered path, the primary path registration unit notifies each node on the inputted primary path to set up a route based on inputted path information; subsequently, the primary path registration unit registers path information representing the inputted primary path into the path information storage unit, and also updates allocation state information about each communication resource allocated to the primary path; and if the allocation state determination unit determines that none of communication resources expected to be allocated to respective links on a backup path to be registered has not been allocated to any other registered primary path, the backup path registration unit registers path information representing the inputted backup path into the path information storage unit, and also updates allocation state information about each communication resource allocated to the backup path.

Thus, the network management device of the first exemplary embodiment of the present invention can manage a communication resource to be allocated dedicatedly to a single primary path and a communication resource able to be allocated to a plurality of backup paths in a shared manner, differently from each other. Accordingly, a communication resource having been allocated to a primary path is exclusively used by the primary path, and is never allocated to any other primary or backup path. Further, it becomes possible to allocate a communication resource already allocated to a backup path to another backup path in a shared manner. As a result, it becomes possible for an administrator, who uses the network management device of the first exemplary embodiment of the present invention, to make advance planning on which communication resource should be secured as a sharable one, at the design stage of the network. Therefore, the present exemplary embodiment also can reduce the operation cost.

### (second exemplary embodiment)

Next, a second exemplary embodiment of the present invention will be described in detail, with reference to drawings. Here, in the drawings referred to in the description of the present exemplary embodiment, to the same configuration as, or a step of similar operation to, that in the first exemplary embodiment of the present invention, the same sign as that used in the first exemplary embodiment is assigned, and its detailed description is omitted in the present exemplary embodiment.

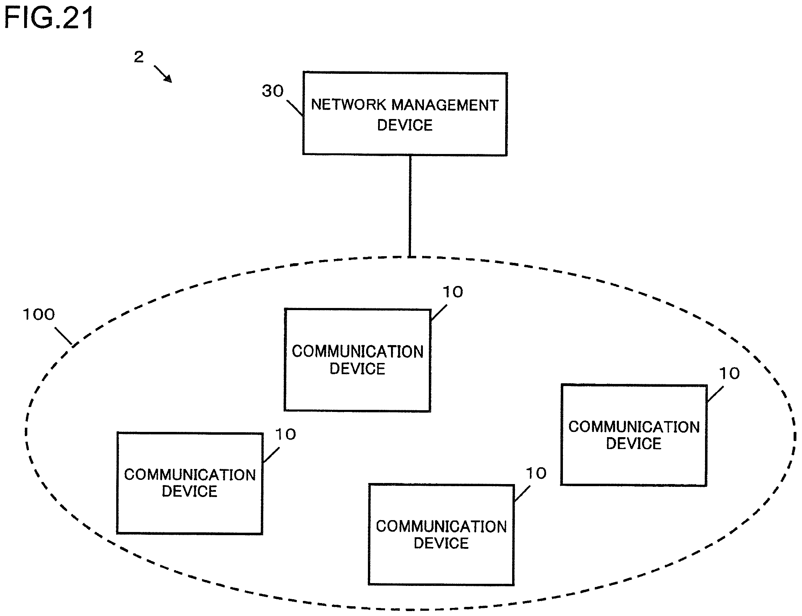

First, a configuration of a communication system 2 as the second exemplary embodiment of the present invention is shown in FIG. 21. In FIG. 21, the communication system 2 is different from the communication system 1 as the first exemplary embodiment of the present invention in that it comprises a network management device 30 in place of the network management device 20.

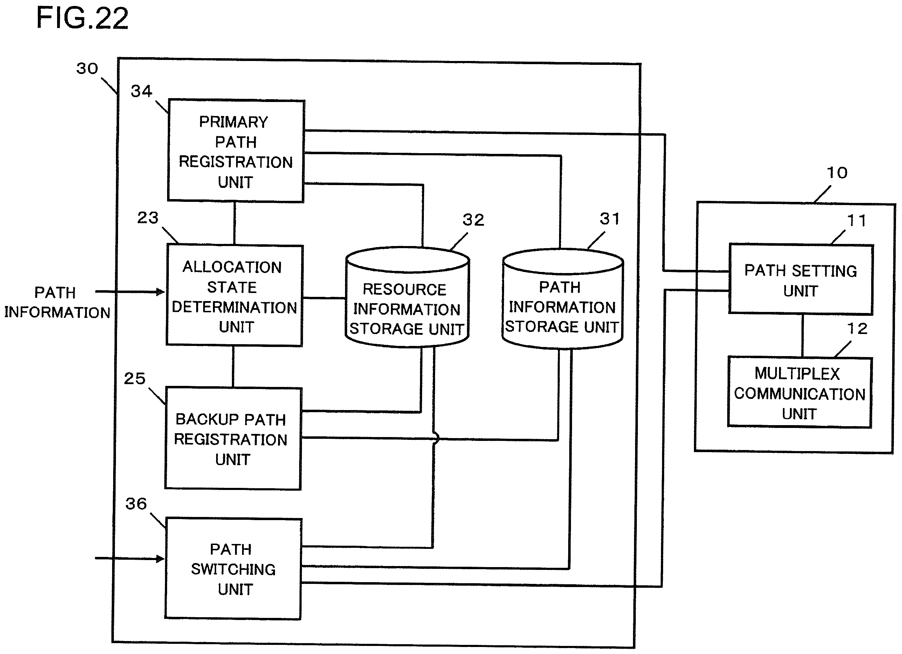

FIG. 22 shows functional blocks of the network management device 30. In FIG. 22, the network management device 30 is different from the network management device 20 as the first exemplary embodiment of the present invention in that it comprises a path information storage unit 31 in place of the path information storage unit 21, a resource information storage unit 32 in place of the resource information storage unit 22, and a primary path registration unit 34 in place of the primary path registration unit 24, and further comprises a path switching unit 36.

Here, the network management device 30 may be constituted by the same hardware components as those of the network management device 20 described using FIG. 4 in the first exemplary embodiment of the present invention. In that case, the path switching unit 36 is constituted by the network interface 2004, the input device 2005 and the processor 2001 which reads, into the memory 2002, and executes a computer program and various kinds of data stored in the storage device 2003. Here, hardware configurations for constituting the network management device 30 and its functional blocks are not limited to the above-described ones.

The path information storage unit 31 stores, as path information, in addition to the same information as that in the first exemplary embodiment of the present invention, working path information indicating whether a working path currently set as the communication route for an end node pair is the primary path or is the backup path.

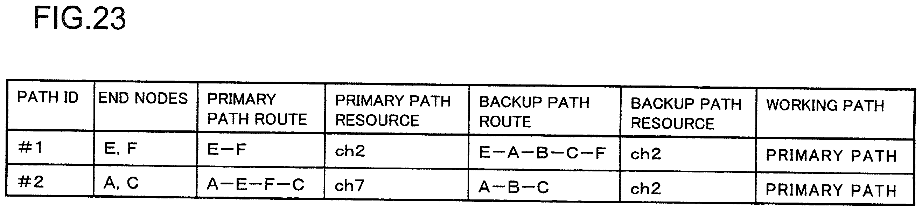

For example, FIG. 23 shows an example of such information stored in the path information storage unit 31. In FIG. 23, for each of the path #1 and path #2, the primary path is the working path.

The resource information storage unit 32 stores, with respect to each communication resource able to be used between neighboring nodes 10 in the network 100, utilization state information about its utilization by the corresponding nodes 10, in addition to the same allocation state information as that in the first exemplary embodiment of the present invention. The utilization state information represents whether or not the communication resource is currently used by the corresponding nodes 10 in communications via the corresponding link.

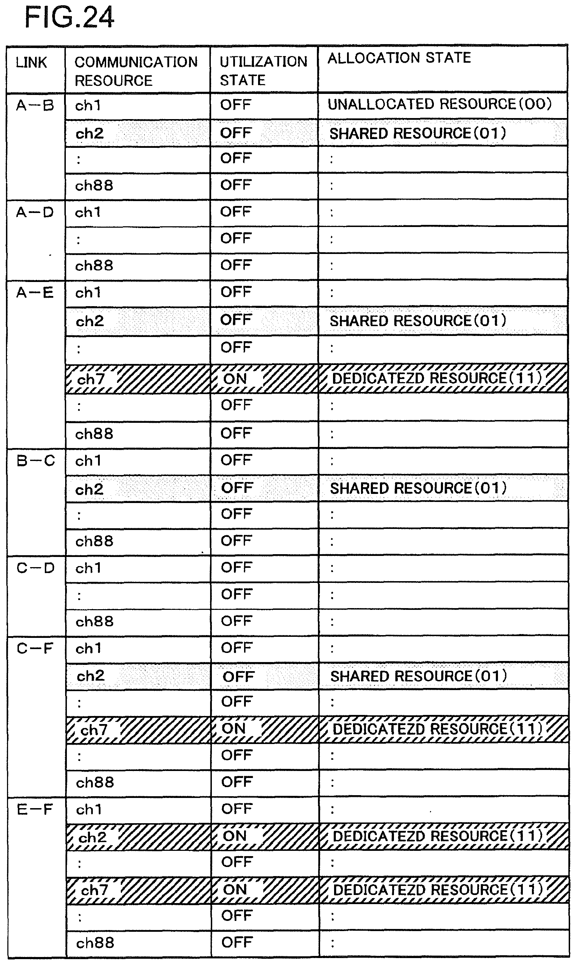

For example, FIG. 24 shows an example of such information stored in the resource information storage unit 32. In FIG. 24, for example, in the link "A-E" between the nodes 10A and 10E, "ch2" managed as a shared resource is in the "off (unused)" state, and "ch7" managed as a dedicated resource is in the "on (used)" state.

In addition to its being configured similarly to the primary path registration unit 24 in the first exemplary embodiment of the present invention, the primary path registration unit 34 sets, when registering a primary path into the path information storage unit 31, "primary path" for the working path information in the path information. Further, the primary path registration unit 34 updates the utilization state information about a communication resource represented by the registered primary path resource information to indicate the "on (used)" state.

If path switching information is inputted, the path switching unit 36 determines whether switching to a path indicated by the path switching information is possible or not. Here, the path switching information is information representing a switching instruction on which one between the primary and backup paths should be set as the working path. The path switching information includes information for identifying the path (such as the path ID or end node information) and information indicating a path (primary path or backup path) to be the working path by the switching. Specifically, if switching to the primary path is indicated, the path switching unit 36 determines that the path switching is possible. It is because any communication resource allocated to the primary path is managed as a dedicated resource and is never used by any other working path.

If switching to the backup path is indicated, the path switching unit 36 determines whether or not any one of communication resources allocated to the backup path is used in communications performed by any other working path. At that time, the path switching unit 36 may determine whether the switching to the backup path is possible or not by referring to utilization state information about each of the communication resources stored in the resource information storage unit 32. For example, if every one of the communication resources allocated to the backup path is in the unused state ("OFF"), the path switching unit 36 determines that the switching to the backup path is possible.

When the path switching is possible, the path switching unit 36 performs the path switching after cancelling the current setting of the working path. For example, by referring to working path information in the path information storage unit 31, the path switching unit 36 identifies nodes 10 on the path currently set as the working path, which is to be switched. Then, the path switching unit 36 notifies each of the nodes 10 on the current working path, to be switched, to cancel the current working path setting and release the communication resources having been used by the current working path.

If succeeding in the cancellation of the current working path setting, the path switching unit 36 notifies nodes 10 on the path indicated by the path switching information to set up the working path using the respective communication resources to be allocated to the path.

After succeeding in the path switching, the path switching unit 36 updates the working path information stored in the path information storage unit 31. Further, with respect to the communication resources whose utilization states have changed as a result of the path switching, the path switching unit 36 updates the utilization state information stored in the resource information storage unit 32. Specifically, the path switching unit 36 updates utilization state information about the communication resources having been released, in association with the cancellation of the working path before the switching, to be information indicating the "off (unused)" state. The path switching unit 36 also updates utilization state information about the communication resources currently used by the working path after the switching to be information indicating the "on (used)" state.

Hereinafter, descriptions will be given of operations in the communication system 2 thus configured, with reference to drawings.

First, path registration operation in the communication system 2 will be described. The path registration operation in the communication system 2 is approximately the same as that in the communication system 1 as the first exemplary embodiment of the present invention, which was already described with reference to FIG. 7. However, the present exemplary embodiment is different in the details of operations in the steps S6 and S7 in FIG. 7, as follows. In the step S6, when having registered a primary path into the path information storage unit 31, the primary path registration unit 34 further sets "primary path" for the working path information in the registered path information. In the step S7, in addition to updating allocation state information about the corresponding communication resources in the resource information storage unit 32, the primary path registration unit 34 also updates their utilization state information to be information indicating the "on (used)" state.

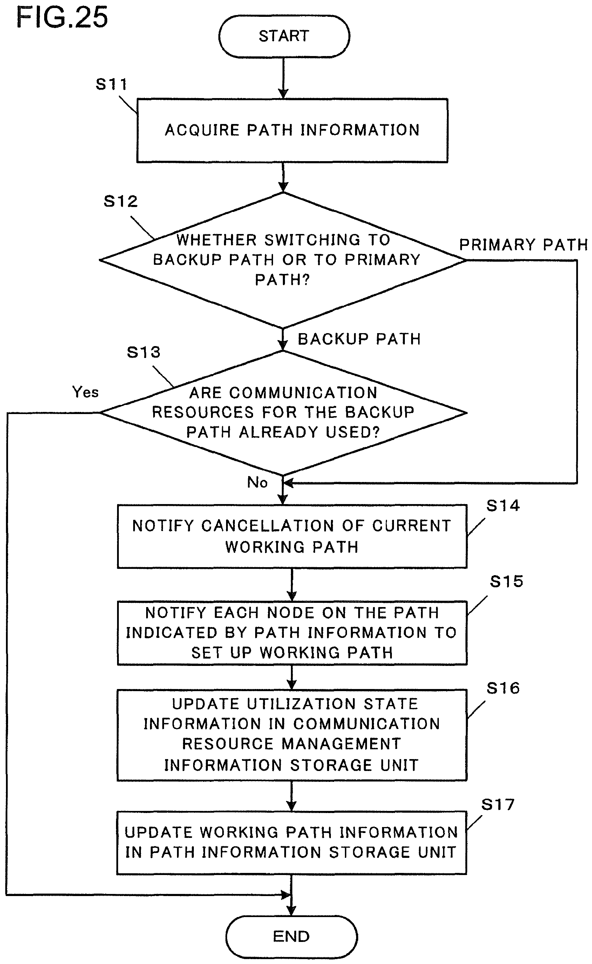

Next, path switching operation in the communication system 2 will be described with reference to FIG. 25.

First, the path switching unit 36 acquires path switching information (step S11). The path switching information includes, as already described, information enabling path identification, such as a path ID, and information indicating a path after the switching (whether the primary path or the backup path).

Then, the path switching unit 36 determines whether the path switching information is information indicating switching to the primary path or that indicating switching to the backup path (step S12).

Here, if it is information indicating switching to the primary path (primary path at S12), the path switching unit 36 determines that the switching is possible, and proceeds to the step S14.

On the other hand, if it is information indicating switching to the backup path (backup path at S12), the path switching unit 36 determines whether shared resources allocated to the backup path indicated by the path switching information are used or not (step S 13). Specifically, in the step S13, the path switching unit 36 determines whether or not every one of one or more communication resources allocated to the backup path indicated by the path switching information is in the "off (unused)" state. At that time, the path switching unit 36 identifies the communication resources allocated to the backup path indicated by the path switching information, by referring to the path information storage unit 31. Then, the path switching unit 36 acquires utilization state information about each of the communication resources allocated to the backup path, from the resource information storage unit 32. Accordingly, the path switching unit 36 may determine whether or not every one of the acquired pieces of utilization state information indicates the "off (unused)" state.

Here, if at least any one of the one or more communication resources allocated to the backup path indicated by the path switching information is in the "on (used)" state (YES at S13), it means that the communication resource, which is managed as a shared resource, is currently used by another backup path which is set as a working path. Therefore, it is impossible to perform the switching to the backup path indicated by the path switching information, and accordingly, the communication system 2 ends the operation.

On the other hand, if every one of the one or more communication resources allocated to the backup path indicated by the path switching information is in the "off (unused)" state (NO at S13), the path switching unit 36 determines that it is possible to perform the switching to the backup path indicated by the path switching information and accordingly proceed to the step S14.

In the step S14, by referring to the working path information stored in the path information storage unit 31, the path switching unit 36 identifies nodes 10 on the working path. Specifically, the path switching unit 36 may identify nodes 10 on the primary path if the working path information indicates the primary path, and may identify nodes 10 on the backup path if the backup path is indicated. Then, the path switching unit 36 notifies each of the nodes 10 on the working path to cancel the current working path setting and release the communication resources having been used by the working path (step S14).

Subsequently, the path switching unit 36 notifies nodes 10 on the path indicated by the path switching information to set up the working path using the respective communication resources allocated to the path (step S15).

If succeeding in performing the processes of the steps S14 to S15, the path switching unit 36 performs update in the resource information storage unit 32 (step S16). Specifically, the path switching unit 36 updates utilization state information about the communication resources having been released in the step S14 to be information indicating the "off (unused)" state. The path switching unit 36 also updates utilization state information about the communication resources on the path having been set in the step S 15 to be information indicating the "on (used)" state.

Subsequently, the path switching unit 36 updates the working path information in the path information (step S 17).

With the above step, the communication system 2 ends the path switching operation.

Next, the operations in the communication system 2 will be described taking a specific example. It is assumed that the configuration of the communication system 2 in the present specific example is the same as that of the specific example of the communication system 1 described using FIG. 8. It is also assumed that the information shown in FIG. 23 is stored in the path information storage unit 31, and the information shown in FIG. 24 in the resource information storage unit 32.

Hereinafter, descriptions will be given of operations, in the specific example, by which the network management device 30 switches the working path of the path #1 and the working path of the path #2. Steps referred to in the following descriptions of the specific example represent the respective corresponding steps illustrated in FIG. 25.

### <switching operation on working path of path #1 (primary path to backup path)>

First, the path switching unit 36 acquires information indicating "switching to the backup path, for the path #1", as path switching information (step S11).

Because the acquired path switching information indicates switching to the backup path ("backup path" at the step S12), the path switching unit 36 acquires utilization state information about the communication resource "ch2" allocated to each link on the backup path "E-A-B-C-F", from the information shown in FIG. 24 stored in the resource information storage unit 32. In FIG. 24, ch2 is in the "OFF (unused)" state in every one of the links (NO at the step S13), and therefore, the path switching unit 36 determines that the switching to the backup path indicated by the path switching information is possible, and accordingly proceeds to the step S14.

Accordingly, by referring to the path information storage unit 31, the path switching unit 36 identifies the nodes 10E and 10F on the primary path having been the working path of the path #1. Then, the path switching unit 36 notifies each of the identified nodes 10E and 10F to cancel the current working path setting and release the communication resource "ch2" having been used by the working path (step S 14).

Next, the path switching unit 36 notifies each of the nodes 10E, 10A, 10B, 10C and 10F on the backup path indicated by the path switching information to set up the working path using the communication resource "ch2" allocated to the backup path (step S15).

If succeeding in performing the processes of the steps S14 to S 15, the path switching unit 36 updates utilization state information about the communication resource "ch2" in the link "E-F" having been released in the step S14 to be information indicating the "OFF (unused)" state. The path switching unit 36 also updates utilization state information about the communication resource "ch2" in each of the links "E-A", "A-B", "B-C" and "C-F" on the backup path having been set in the step S15 to be information indicating the "ON (used)" state (step S16).

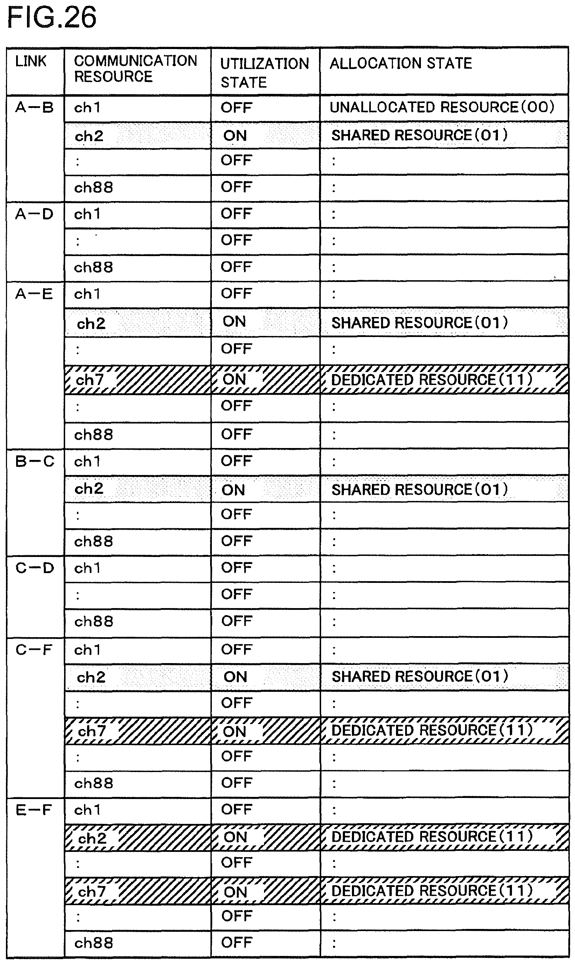

As a result, information stored in the resource information storage unit 32 becomes as shown in FIG. 26.

Next, the path switching unit 36 updates, in the path information storage unit 31, working path information in the path information about the path #1 to indicate "backup path" (step S 17).

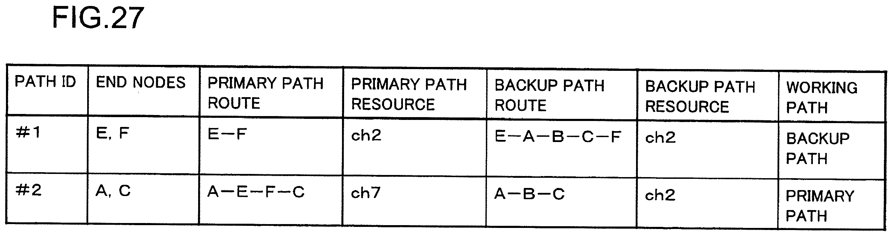

As a result, information stored in the path information storage unit 31 becomes as shown in FIG. 27.

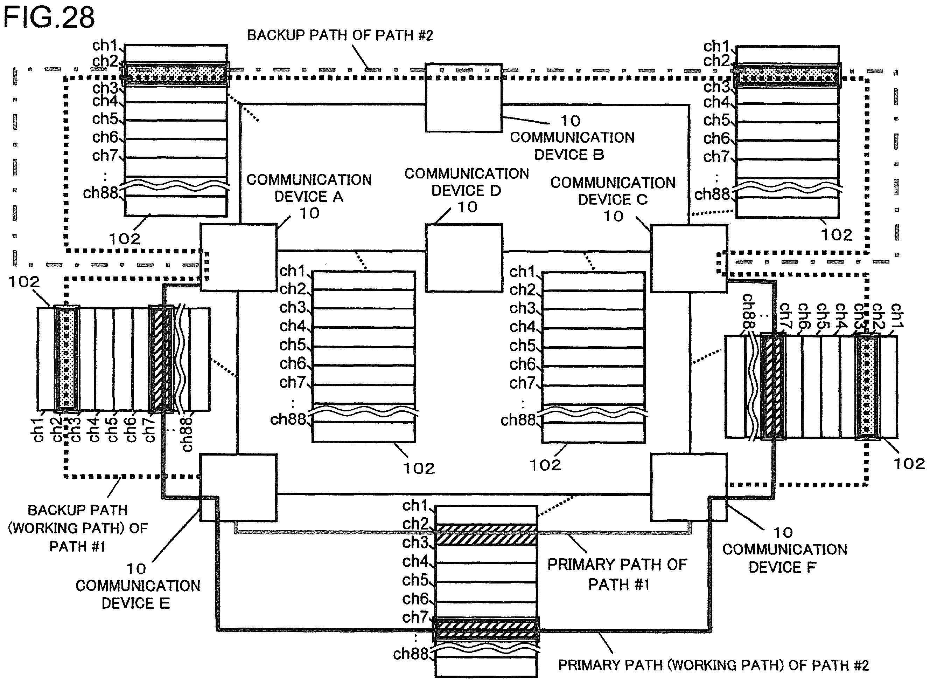

FIG. 28 schematically shows a state where the working path of the path #1 has been switched in the above-described way from the primary path to the backup path. In FIG. 28, each rectangle filled with a slanted line pattern represents a communication resource managed as a dedicated resource by the network management device 30, as already described above. Each rectangle filled with a dot pattern represents a communication resource managed as a shared resource by the network management device 30, as already described above. Further, each rectangle enclosed with a double line represents a communication resource used by the corresponding nodes 10 in the corresponding link, as already described above.

Here, in the state shown in FIG. 28, the communication resource "ch2" in the link "E-F" is not currently used, but is a dedicated resource. It is supposed that, in that state, path information to be registered which intends to allocate the communication resource "ch2" to the link E-F is inputted to the network management device 30. In that case, operating similarly to in the first exemplary embodiment of the present invention, the network management device 30 determines that the communication resource "ch2" in the link E-F is a "dedicated resource" and therefore cannot be allocated as a dedicated resource for a new primary path (or, as a shared resource for a new backup path). Accordingly, in that case, the network management device 30 does not register a new primary path (or backup path) expected to use the communication resource "ch2". Thus, the network management device 30 never allocates a communication resource managed by it as a dedicated resource to another primary or backup path, regardless of a utilization state of the communication resource.

### <switching operation on working path of path #2 (primary path to backup path)>

A description will be given of operation in the communication system 2 which is performed when path switching information about the path #2 is acquired in the state shown in FIG. 28.

First, the path switching unit 36 acquires information indicating "switching to the backup path, for the path #2", as path switching information (step S11).

Because the acquired path switching information indicates switching to the backup path ("backup path" at the step S12), the path switching unit 36 acquires utilization state information about the communication resource "ch2" allocated to each link on the backup path "A-B-C", from the information shown in FIG. 26 stored in the resource information storage unit 32. In FIG. 26, ch2 is in the "ON (used)" state in each of the links "A-B" and "B-C" on the backup path "A-B-C" (YES at the step S13). Accordingly, the path switching unit 36 determines that the switching to the backup path indicated by the path switching information is impossible. Then, the communication system 2 ends the operation.

Thus, when the backup path for a certain end node pair is already set as the working path, the network management device 30 avoids performing, on another end node pair, path switching to its backup path to which any of the shared resources used by the already set backup path is allocated in a shared manner.

For example, it is supposed that, in a state where a group of paths is set as shown in FIG. 20, there arises necessity of package replacement or the like in the nodes 10E and 10A. In that case, the communication system 2 may operate as follows, for example.
Step S21): First, the communication system 2 switches the working path of the path #1 from the primary path to the backup path. Here, a package in the node 10E may be replaced by the administrator or the like.
Step S22): Next, the communication system 2 switches the working path of the path #1 from the backup path to the primary path.
Step S23): Next, the communication system 2 switches the working path of the path #2 from the primary path to the backup path. Here, a package in the node 10A may be replaced by the administrator or the like.
Step S24): Next, the communication system 2 switches the working path of the path #2 from the backup path to the primary path.

Here, the communication system 2 may perform the operation of the steps S21 to S24 in response to input of path switching information by an operator. Alternatively, the communication system 2 may perform the operation of the steps S21 to S24 in response to its acquiring path switching information outputted from an external scheduling device at a pre-scheduled timing. Further alternatively, the communication system 2 may perform the operation of the steps S21 to S24 in response to its acquiring path switching information outputted by an external detection device for detecting start or ending of maintenance operation such as package replacement.

Thus, the description of the specific example of operations in the communication system 2 has been completed.

Next, advantageous effects of the second exemplary embodiment of the present invention will be described.

The communication system as the second exemplary embodiment of the present invention can appropriately perform operation of switching to a detour path for a path in a network consisting of a plurality of nodes, while efficiently utilizing communication resources for the detour path.

The reason is that: when path switching information representing a switching instruction on a path has been inputted, if the switching instruction is that for switching to the backup path, the path switching unit determines whether or not one or more communication resources allocated to the backup path are currently used by any other backup path and, if not used, notifies each node on the backup path to cancel the current working path setting before switching and then set up the working path using the communication resources; to enable the above operation, the resource information storage unit stores utilization state information, about each communication resource, which indicates whether or not the communication resource is currently used for communications on any working path; and also to enable the above operation, the path information storage unit stores working path information indicating whether the working path is currently set to be the primary path or to be the backup path.

Accordingly, using that it is unlikely that backup paths for different primary paths become required at the same time, the network management device as the second exemplary embodiment of the present invention allocates a communication resource to different backup paths in a shared manner, and performs control such that simultaneous switchings to the different backup paths sharing the communication resource never occur, and as a result, can appropriately perform operation of switching to a detour path.

While, in each of the above-described exemplary embodiments of the present invention, the description was given focusing on the example where a single backup path can be set for each primary path, a plurality of backup paths may be set for a single primary path. In that case, the path information storage unit in each of the exemplary embodiments may store path information in a manner to include one or more pieces of backup path route information and their backup path resource information in each piece of path information.

Further, in each of the above-described exemplary embodiments of the present invention, the data structures of information stored in the path information storage unit and of that stored in the resource information storage unit are each merely an example, and other data structures may be used. For example, the path information storage unit may store a path route information table in which route information about a primary path and a backup path and communication resource information are correlated with a path ID, and store also a path configuration information table in which working path information and end node information are correlated to a path ID.

In each of the above-described exemplary embodiments of the present invention, the description was given focusing on the example where the allocation state determination unit acquires path information from the input device or an operator terminal and then registers it. Alternatively, the allocation state determination unit in each of the exemplary embodiments may acquire path information from an external device such as a path generation device for generating a primary path for an end node pair and its backup path in the communication system, and then register it.

Further, in the above-described second exemplary embodiment of the present invention, the description was given focusing on the example where the path switching unit acquires path switching information from the input device or an operator terminal and accordingly performs switching. Alternatively, the path switching unit in the second exemplary embodiment of the present invention may acquire path switching information from an external device such as a failure path detection device for detecting a path on which a failure has occurred in the communication system, and accordingly perform switching.

Further, in each of the above-described exemplary embodiments of the present invention, the network management device may be constituted by a common device with any one of the communication devices.

Further, in each of the above-described exemplary embodiments of the present invention, the operations of the network management device described with reference to the flow chart may be stored, as a computer program of the present invention, in a storage device (recording medium) of a computer, and the computer program may be read and executed by the CPU (Central Processing Unit). In such a case, the present invention is constituted by the code of the computer program or a recording medium storing the computer program.

Further, the above-described exemplary embodiments may be implemented in a form of their appropriate combination.

While the present invention has been described above with reference to the exemplary embodiments, the present invention is not limited to the above-described exemplary embodiments. To the configurations and details of the present invention, various modifications or changes which can be understood by those skilled in the art may be made within the scope of the present invention.

### [Reference Signs List]

- 1, 2: communication system
- 10: communication device (node)
- 11: path setting unit
- 12: multiplex communication unit
- 20, 30: network management device
- 21, 31: path information storage unit
- 22, 32: resource information storage unit
- 23: allocation state determination unit
- 24, 34: primary path registration unit
- 25: backup path registration unit
- 36: path switching unit
- 100: network
- 1001: interface
- 1002: switch
- 1003: control unit
- 2001: processor
- 2002: memory
- 2003: storage device
- 2004: network interface
- 2005: input device
- 2006: output device

## Claims

1. A network management device comprising:
path information storage means for storing path information including information about each of pairs of two communication devices (nodes) among a plurality of communication devices capable of communicating with each other, the information representing a primary or backup communication route (path) between the two nodes and one or more communication resources allocated to the path;
resource information storage means for storing allocation state information, about each of the communication resources, representing the communication resource's allocation state to the path;
allocation state determination means for, when the path information to be registered has been inputted, determining the allocation states of one or more communication resources to be allocated to the path represented by the path information by referring to the resource information storage means;
primary path registration means for, when the inputted path information represents a primary path to be registered, if the allocation state determination means determines that none of one or more communication resources to be allocated to the primary path to be registered has been allocated to any one of already registered paths, notifying each node on the primary path to set up a route based on the inputted path information, registering the inputted path information into the path information storage means and updating the allocation state information about the one or more communication resources to be allocated to the primary path; and
backup path registration means for, when the inputted path information represents a backup path to be registered, if the allocation state determination means determines that none of one or more communication resources to be allocated to the backup path to be registered has been allocated to any one of already registered primary paths, registering the inputted path information into the path information storage means and updating the allocation state information about the one or more communication resources to be allocated to the backup path.

2. The network management device according to claim 1, wherein:
the resource information storage means stores, as the allocation state information about each of the communication resources, information representing any one among a dedicated resource indicating that the communication resource is allocated dedicatedly to the primary path, a shared resource indicating that the communication resource is allocated to the backup path in a manner of being able to be shared with another backup path, and an unallocated resource indicating that the communication resource is allocated to none of the primary and backup paths;
the primary path registration means functions when the allocation state determination means has determined that every one of the pieces of allocation state information about the one or more communication resources to be allocated to the primary path to be registered, stored in the resource information storage means, represents the unallocated resource; and
the backup path registration means functions when the allocation state determination means has determined that every one of the pieces of allocation state information about the one or more communication resources to be allocated to the backup path to be registered, stored in the resource information storage means, represents either the shared resource or the unallocated resource.

3. The network management device according to claim 1 or 2, wherein:
the path information storage means further stores working path information indicating which one between the primary and backup paths a path (working path) routed as a communication path between two nodes is;
the resource information storage means further stores utilization state information indicating whether each of the communication resources is used in the working path; and
when path switching information to order switching of the working path has been inputted, if the utilization state information about one or more communication resources allocated to a path indicated by the path switching information indicates that none of the communication resources is used, each node on the working path before switching is notified to cancel the route setting, each node on the path indicated by the path switching information is notified to set up a route based on the path, the utilization state information is updated with respect to each communication resource whose utilization state has changed as a result of the path switching, and the working path information is updated with respect to the node pair whose working path has been changed by the switching.

4. A communication device comprising:
path setting means for, on receiving notification to set up a route based on the path information from the network management device according to any one of claims 1 to 3, setting up a route in a manner to enable communication with other communication devices neighboring the own communication device on the path by the use of communication resources allocated to the path; and
multiplex communication means for performing multiplex communication with the other communication devices based on the setting by the path setting means.

5. A communication system comprising:
the network management device according to any one of claims 1 to 3; and
the communication device according to claim 4.

6. A network management method comprising,
by the use of
path information storage means for storing path information including information about each of pairs of two communication devices (nodes) among a plurality of communication devices capable of communicating with each other, the information representing a primary or backup communication route (path) between the two nodes and one or more communication resources allocated to the path, and resource information storage means for storing allocation state information, about each of the communication resources, representing the communication resource's allocation state to the path: when the path information to be registered has been inputted, determining the allocation states of one or more communication resources to be allocated to the path represented by the path information by referring to the resource information storage means; and
when the inputted path information represents a primary path to be registered, if it is determined that none of one or more communication resources to be allocated to the primary path to be registered has been allocated to any one of already registered paths, notifying each node on the primary path to set up a route based on the inputted path information, registering the inputted path information into the path information storage means and updating the allocation state information about the one or more communication resources to be allocated to the primary path, and
when the inputted path information represents a backup path to be registered, if it is determined that none of one or more communication resources to be allocated to the backup path to be registered has been allocated to any one of already registered primary paths, registering the inputted path information into the path information storage means and updating the allocation state information about the one or more communication resources to be allocated to the backup path.

7. The network management method according to claim 6 comprising,
when the resource information storage means stores, as the allocation state information about each of the communication resources, information representing any one among a dedicated resource indicating that the communication resource is allocated dedicatedly to the primary path, a shared resource indicating that the communication resource is allocated to the backup path in a manner of being able to be shared with another backup path, and an unallocated resource indicating that the communication resource is allocated to none of the primary and backup paths,
if it is determined that every one of the pieces of allocation state information about the one or more communication resources to be allocated to the primary path to be registered, stored in the resource information storage means, represents the unallocated resource, executing the notification of route setting, the registration of the path information representing the primary path and the update of the allocation state information; and
if it is determined that every one of the pieces of allocation state information about the one or more communication resources to be allocated to the backup path to be registered, stored in the resource information storage means, represents either the shared resource or the unallocated resource, executing the registration of the path information representing the backup path and the update of the allocation state information.

8. A program recording medium storing a computer program for causing a computer to execute,
by the use of path information storage means for storing path information including information about each of pairs of two communication devices (nodes) among a plurality of communication devices capable of communicating with each other, the information representing a primary or backup communication route (path) between the two nodes and one or more communication resources allocated to the path, and resource information storage means for storing allocation state information, about each of the communication resources, representing the communication resource's allocation state to the path:
an allocation state determination step of, when the path information to be registered has been inputted, determining the allocation states of one or more communication resources to be allocated to the path represented by the path information by referring to the resource information storage means;
a primary path registration step of, when the inputted path information represents a primary path to be registered, if it is determined in the allocation state determination step that none of one or more communication resources to be allocated to the primary path to be registered has been allocated to any one of already registered paths, notifying each node on the primary path to set up a route based on the inputted path information, registering the inputted path information into the path information storage means and updating the allocation state information about the one or more communication resources to be allocated to the primary path; and
a backup path registration step of, when the inputted path information represents a backup path to be registered, if it is determined in the allocation state determination step that none of one or more communication resources to be allocated to the backup path to be registered has been allocated to any one of already registered primary paths, registering the inputted path information into the path information storage means and updating the allocation state information about the one or more communication resources to be allocated to the backup path.

9. The program recording medium according to claim 8,
wherein
when the resource information storage means stores, as the allocation state information about each of the communication resources, information representing any one among a dedicated resource indicating that the communication resource is allocated dedicatedly to the primary path, a shared resource indicating that the communication resource is allocated to the backup path in a manner of being able to be shared with another backup path, and an unallocated resource indicating that the communication resource is allocated to none of the primary and backup paths,
the computer program executes:
the primary path registration step, if it is determined that every one of the pieces of allocation state information about the one or more communication resources to be allocated to the primary path to be registered, stored in the resource information storage means, represents the unallocated resource: and
the backup path registration step, if it is determined that every one of the pieces of allocation state information about the one or more communication resources to be allocated to the backup path to be registered, stored in the resource information storage means, represents either the shared resource or the unallocated resource.
